# EUROPEAN PATENT SPECIFICATION

(11) **EP 1 511 803 B1**
(45) Date of publication and mention of the grant of the patent: **19.09.2007**
(21) Application number: 03738009.4
(22) Date of filing: 10.06.2003
(51) Int. Cl.: C08L 23/00, C08L 23/10, C08L 23/14, C08L 23/16

(54) **PROPYLENE COPOLYMER COMPOSITIONS HAVING A GOOD LOW-TEMPERATURE IMPACT TOUGHNESS AND A HIGH TRANSPARENCY**
PROPYLEN COPOLYMERZUSAMMENSETZUNGEN MIT GUTER TIEFTEMPERATUR-SCHLAGFESTIGKEIT UND HOHER TRANSPARENZ
COMPOSITIONS COPOLYMERES DE PROPYLENE PRESENTANT UNE BONNE RESISTANCE AUX CHOCS A BASSE TEMPERATURE ET UNE TRANSPARENCE ELEVEE

(30) Priority: 12.06.2002 DE 10226184; 09.07.2002 US 394615 P
(43) Date of publication of application: 09.03.2005
(73) Proprietor: Basell Polyolefine GmbH, 50389 Wesseling (DE)
(72) Inventor: FUCHS, Alexander, I-44100 Ferrara (DE); MORHARD, Friederike, 44100 Ferrara (IT)
(86) International application number: PCT/EP2003/006043
(87) International publication number: WO 2003/106553

(56) References cited:
- EP-A- 0 885 926
- WO-A-01/48034

## Description

The invention relates to propylene copolymer compositions, to a process for producing the propylene copolymer compositions, to the use of the propylene copolymer compositions of the present invention for producing fibers, films or moldings and also to fibers, films or moldings comprising the propylene copolymer compositions of the present invention.

Propylene polymers are one of the classes of plastics most frequently used today. The customarily used polymers of propylene have an isotactic structure. They can be processed to form shaped bodies which possess advantageous mechanical properties, especially a high hardness, stiffness and shape stability. Consumer articles made of propylene polymers are used in a wide range of applications, e.g. as plastic containers, as household or office articles, toys or laboratory requisites. However, the products known from the prior art do not have the combination of low-temperature impact toughness together with a good transparency and good stress whitening behavior required for many applications.

It is known that multiphase propylene copolymers having a good impact toughness, particularly at low temperatures, can be prepared by means of Ziegler-Natta catalyst systems in a multistage polymerization reaction. However, the incorporation of ethylene-propylene copolymers having a high proportion of ethylene into a polymer matrix, which is necessary to increase the low-temperature impact toughness, makes the multiphase propylene copolymer turbid. Poor miscibility of the flexible phase with the polymer matrix leads to a separation of the phases and thus to turbidity and to poor transparency values of the heterogeneous copolymer. Furthermore, the ethylene-propylene rubber prepared by means of conventional Ziegler-Natta catalysts also has a very inhomogeneous composition.

It is also known that multiphase copolymers of propylene can be prepared using metallocene catalyst systems. Propylene polymers prepared using metallocene catalyst systems have low extractable contents, a homogeneous comonomer distribution and good organoleptics.

The multiphase copolymers of propylene disclosed in WO 94/28042 have the disadvantage that they have a melting point which is too low, which has an adverse effect on the stiffness and the heat distortion resistance of the copolymers. Furthermore, the toughness, too, is not yet satisfactory.

EP-A 433 986 describes multiphase propylene copolymers having a syndiotactic structure which were obtained using specific metallocene catalyst systems. These propylene copolymer compositions have relatively low melting points and consequently a low stiffness and a low heat distortion resistance.

EP-A 1 002 814 describes multiphase copolymers of propylene which display an excellent balance between stiffness, impact toughness and heat distortion resistance.

WO 01/48034 relates to metallocene compounds by means of which propylene copolymers having a high molar mass and a high copolymerized ethylene content can be obtained under industrially relevant polymerization conditions. Multiphase propylene copolymers having a high stiffness/impact toughness level are obtainable in this way.

However, the multiphase propylene copolymers disclosed in the prior art have the disadvantage that a satisfactory combination of low-temperature impact toughness with a good transparency and at the same time good stress whitening behavior has not been achieved. The products either have a not yet satisfactory impact toughness at low temperatures or have still unsatisfactory values for transparency and stress whitening.

It is an object of the present invention to overcome the above-described disadvantages of the prior art and to provide propylene copolymer compositions which have a combination of good impact toughness at low temperatures together with good transparency and good stress whitening behavior and also possess a relatively high melting point, a high stiffness and good heat distortion resistance in combination with low extractable contents, a homogeneous comonomer distribution and good organoleptics.

We have found that this object is achieved by propylene copolymer compositions comprising
A) a propylene polymer containing from 0 to 10% by weight of olefins other than propylene and
B) at least one propylene copolymer containing from 12 to 18% by weight of olefins other than propylene,
where the propylene polymer A and the propylene copolymer B are present as separate phases, the weight ratio of propylene polymer A to the propylene copolymer B is from 80: 20 to 60: 40 and
the propylene copolymer compositions have a haze value of ≤ 30%, based on a path length of the propylene copolymer composition of 1 mm and the brittle/tough transition temperature of the propylene copolymer compositions is ≤ -15°C.

Furthermore, we have found a process for preparing propylene copolymer compositions, the use of the propylene copolymer compositions for producing fibers, films or moldings and also fibers, films or moldings which comprise propylene copolymer compositions of the present invention, preferably as substantial component.

The propylene polymer A present in the propylene copolymer compositions of the present invention and the propylene copolymer present as component B are present as separate phases. Propylene copolymer compositions having such a structure are also referred to as multiphase propylene copolymers, heterogeneous propylene copolymers or as propylene block copolymers.

In the multiphase propylene copolymer compositions of the present invention, the propylene polymer A usually forms a three-dimensionally coherent phase in which the phase of the propylene copolymer B is embedded. Such a coherent phase in which one or more other phases are dispersed is frequently referred to as the matrix. The matrix usually also makes up the major proportion by weight of the polymer composition.

In the multiphase propylene copolymer compositions of the present invention, the propylene copolymer B is generally dispersed in finely divided form in the matrix. Furthermore, the diameter of the then isolated domains of the propylene copolymer B is usually from 100 nm to 1000 nm. Preference is given to a geometry with a length in the range from 100 nm to 1000 nm and a thickness in the range from 100 to 300 nm. The determination of the geometry of the individual phases of the propylene copolymer compositions can be carried out, for example, by evaluation of contrasted transmission electron micrographs (TEMs).

To prepare the propylene polymers present in the propylene copolymer compositions of the present invention, at least one further olefin is used as monomer in addition to propylene. As comonomers in the propylene copolymers B and optionally in the propylene polymers A, all olefins other than propylene, in particular α-olefins, i.e. hydrocarbons having terminal double bonds, are conceivable. Preferred α-olefins are linear or branched C₂-C₂₀-1-alkenes other than propylene, in particular linear C₂-C₁₀-1-alkenes or branched C₂-C₁₀-1-alkenes, e.g. 4-methyl-1-pentene, conjugated and unconjugated dienes such as 1,3-butadiene, 1,4-hexadiene or 1,7-octadiene or vinylaromatic compounds such as styrene or substituted styrene. Suitable olefins also include olefins in which the double bond is part of a cyclic structure which may comprise one or more ring systems. Examples are cyclopentene, norbornene, tetracyclododecene or methylnorbornene or dienes such as 5-ethylidene-2-norbornene, norbornadiene or ethylnorbornadiene. It is also possible to copolymerize mixtures of two or more olefins with propylene. Particularly preferred olefins are ethylene and linear C₄-C₁₀-1-alkenes such as 1-butene, 1-pentene, 1-hexene, 1-heptene, 1-octene, 1-decene, in particular ethylene and/or 1-butene.

The propylene polymer A present in the propylene copolymer compositions of the present invention may be a propylene homopolymer or a propylene copolymer containing up to 10% by weight of olefins other than propylene. Preferred propylene copolymers contain from 1.5 to 7% by weight, in particular from 2.5 to 5% by weight, of olefins other than propylene. As comonomers, preference is given to using ethylene or linear C₄-C₁₀-1-alkenes or mixtures thereof, in particular ethylene and/or 1-butene. The propylene polymer A preferably has an isotactic structure, which hereinafter means that, with the exception of a few faults, all methyl side groups are arranged on the same side of the polymer chain.

The component B present in the propylene copolymer compositions of the present invention is made up of at least one propylene copolymer containing from 12 to 18% by weight of olefins other than propylene. It is also possible for two or more propylene copolymers which are different from one another to be present as component B; these may differ in respect of both the amount and type of the copolymerized olefin(s) other than propylene. Preferred comonomers are ethylene or linear C₄-C₁₀-1-alkenes or mixtures thereof, in particular ethylene and/or 1-butene. In a further, preferred embodiment, monomers containing at least two double bonds, e.g. 1,7-octadiene or 1,9-decadiene, are additionally used. The content of the olefins other than propylene in the propylene copolymers is generally from 12 to 18% by weight, and preferably from 14% by weight to 17% by weight, based on the propylene copolymer B.

The weight ratio of propylene polymer A to propylene copolymer B is from 80:20 to 60:40. It is preferably from 70:30 to 60:40. Here, propylene copolymer B includes all the propylene copolymers forming the component B.

The propylene copolymer compositions of the present invention have a haze value of ≤ 30%, preferably ≤ 25%, more preferably ≤ 20%, particularly preferably ≤ 15% and very particularly preferably ≤ 12%, based on a path length of the propylene copolymer composition of 1 mm. The haze value is a measure of the turbidity of the material and is thus a parameter which characterizes the transparency of the propylene copolymer compositions. The lower the haze value, the higher the transparency. Furthermore, the haze value is also dependent on the path length. The thinner the layer, the lower the haze value. The haze value is generally measured in accordance with the standard ASTM D 1003, with different test specimens being able to be used, for example injection-molded test specimens having a thickness of 1 mm or films having a thickness of, for example, 50 µm. According to the present invention, the propylene copolymer compositions are characterized by means of the haze value of injection-molded test specimens having a thickness of 1 mm.

Furthermore, the propylene copolymer compositions of the present invention have a brittle/tough transition temperature of ≤ -15°C, preferably ≤ -18°C and particularly preferably ≤ -20°C. Very particular preference is given to brittle/tough transition temperatures of ≤ -22°C, in particular ≤ -26°C.

Propylene polymers are tough materials at room temperature, i.e. plastic deformation occurs under mechanical stress only before the material breaks. However, at reduced temperatures, propylene polymers display brittle fracture, i.e. fracture occurs virtually without deformation or at a high propagation rate. A parameter which describes the temperature at which the deformation behavior changes from tough to brittle is the "brittle/tough transition temperature".

In the propylene copolymer compositions of the present invention, the propylene polymer A is generally present as matrix and the propylene copolymer B, which usually has a stiffness lower than that of the matrix and acts as impact modifier, is dispersed therein in finely divided form. Such an impact modifier not only increases the toughness at elevated temperatures but also reduces the brittle/tough transition temperature. For the purposes of the present invention, the brittle/tough transition temperature is determined by means of puncture tests in accordance with ISO 6603-2, in which the temperature is reduced in continuous steps. The force/displacement graphs recorded in the puncture tests enable conclusions as to the deformation behavior of the test specimens at the respective temperature to be drawn and thus allow the brittle/tough transition temperature to be determined. To characterize the specimens according to the present invention, the temperature is reduced in steps of 2°C and the brittle/tough transition temperature is defined as the temperature at which the total deformation is at least 25% below the mean total deformation of the preceding 5 measurements; here, the total deformation is the displacement through which the punch has traveled when the force has passed through a maximum and dropped to 3% of this maximum force. In the case of specimens which do not display a sharp transition and in which none of the measurements meet the specified criterion, the total deformation at 23°C is employed as reference value and the brittle/tough transition temperature is the temperature at which the total deformation is at least 25% below the total deformation at 23°C.

Furthermore, the propylene copolymer compositions of the present invention display good stress whitening behavior. For the purposes of the present invention, stress whitening is the
occurrence of whitish discoloration in the stressed region when the polymer is subjected to mechanical stress. In general, it is assumed that the white discoloration is caused by small voids being formed in the polymer under mechanical stress. Good stress whitening behavior means that no or only very few regions having a whitish discoloration occur under mechanical stress.

One method of quantifying stress whitening behavior is to subject defined test specimens to a defined impact stress and then to measure the size of the resulting white spots. Accordingly, in the dome method, a falling dart is dropped onto a test specimen in a falling dart apparatus in accordance with DIN 53443 Part 1. In this method, a falling dart having a mass of 250 g and a punch of 5 mm in diameter is used. The dome radius is 25 mm and the drop is 50 cm. The test specimens used are injection-molded circular disks having a diameter of 60 mm and a thickness of 2 mm, and each test specimen is subjected to only one impact test. The stress whitening is reported as the diameter of the visible stress whitening region in mm; the value reported is in each case the mean of 5 test specimens and the individual values are determined as the mean of the two values in the flow direction on injection molding and perpendicular thereto on the side of the circular disk opposite that on which impact occurs.

The propylene copolymer compositions of the present invention display no or only very little stress whitening determined by the dome method at 23°C. In the case of preferred propylene copolymer compositions, a value of from 0 to 8 mm, preferably from 0 to 5 mm and in particular from 0 to 2.5 mm, is determined by the dome method at 23°C. Very particularly preferred propylene copolymer compositions display no stress whitening at all in the test carried out by the dome method at 23°C.

The propylene copolymer compositions of the present invention generally further comprise customary amounts of customary additives known to those skilled in the art, e.g. stabilizers, lubricants and mold release agents, fillers, nucleating agents, antistatics, plasticizers, dyes, pigments or flame retardants. In general, these are incorporated during granulation of the pulverulent product obtained in the polymerization.

Customary stabilizers include antioxidants such as sterically hindered phenols, processing stabilizers such as phosphites or phosphonites, acid scavengers such as calcium stearate or zinc stearate or dihydrotalcite, sterically hindered amines or UV stabilizers. In general, the propylene copolymer compositions of the present invention contain one or more stabilizers in amounts of up to 2% by weight.

Suitable lubricants and mold release agents are, for example, fatty acids, calcium or zinc salts of fatty acids, fatty acid amides or low molecular weight polyolefin waxes, which are usually used in concentrations of up to 2% by weight.

Possible fillers are, for example, talc, chalk or glass fibers, and these are usually used in amounts of up to 50% by weight.

Examples of suitable nucleating agents are inorganic additives such as talc, silica or kaolin, salts of monocarboxylic or polycarboxylic acids, e.g. sodium benzoate or aluminum tert-butylbenzoate, dibenzylidenesorbitol or its C₁-C₈-alkyl-substituted derivatives such as methyldibenzylidenesorbitol, ethyldibenzylidenesorbitol or dimethyldibenzylidenesorbitol or salts of diesters of phosphoric acid, e.g. sodium 2,2'-methylenebis(4,6,-di-tert-butylphenyl)phosphate. The nucleating agent content of the propylene copolymer composition is generally up to 5% by weight.

Such additives are generally commercially available and are described, for example, in Gächter/Müller, Plastics Additives Handbook, 4th Edition, Hansa Publishers, Munich, 1993.

In a preferred embodiment, the propylene copolymer compositions of the present invention contain from 0.1 to 1% by weight, preferably from 0.15 to 0.25% by weight, of a nucleating agent, in particular dibenzylidenesorbitol or a dibenzylidenesorbitol derivative, particularly preferably dimethyldibenzylidenesorbitol.

The properties of the propylene copolymer compositions of the present invention are determined essentially by the glass transition temperature of the propylene copolymers B. One way of determining the glass transition temperature of the propylene copolymers B present in the propylene copolymer compositions is examination of the propylene copolymer compositions by means of DMTA (dynamic mechanical thermal analysis), in which the deformation of a sample under the action of a sinusoidally oscillating force is measured as a function of temperature. Here, both the amplitude and the phase shift of the deformation versus the applied force are determined. Preferred propylene copolymer compositions have glass transition temperatures of the propylene copolymers B in the range from -20°C to -40°C, preferably from -25°C to -38°C, particularly preferably from -28°C to -35°C and very particularly preferably from -31°C to -34°C.

The glass transition temperature of the propylene copolymers B is determined essentially by their composition and especially by the proportion of copolymerized comonomers other than propylene. The glass transition temperature of the propylene copolymers B can thus be controlled via the type of monomers used in the polymerization of the proylene copolymers B and their ratios. For example, in the case of propylene copolymer compositions prepared using propylene-ethylene copolymers as propylene copolymer B, an ethylene content of 16% by weight corresponds to a glass transition temperature of from -33°C to -35°C.

The composition of the propylene copolymers B present in the propylene copolymer compositions of the present invention is preferably uniform. This distinguishes them from conventional heterogeneous propylene copolymers which are polymerized using Ziegler-Natta catalysts, since the use of Ziegler-Natta catalysts results in blockwise incorporation of the comonomer into the propylene copolymer even at low comonomer concentrations, regardless of the polymerization process. For the purposes of the present invention, the term "incorporated blockwise" indicates that two or more comonomer units follow one another directly.

In the case of preferred propylene copolymer compositions obtained from propylene and ethylene, the structure of the propylene-ethylene copolymers B can be determined by means of ¹³C-NMR spectroscopy. Evaluation of the spectrum is prior art and can be carried out by a person skilled in the art using, for example, the method described by H. N. Cheng, Macromolecules 17 (1984), pp. 1950-1955 or L. Abis et al., Makromol. Chemie 187 (1986), pp. 1877-1886. The structure can then be described by the proportions of "PEₓ" and of "PEP", where PEₓ refers to the propylene-ethylene units having ≥ 2 successive ethylene units and PEP refers to the propylene-ethylene units having an isolated ethylene unit between two propylene units. Preferred propylene copolymer compositions obtained from propylene and ethylene have a PEP/PEₓ ratio of ≥ 0.75, preferably ≥ 0.85 and particularly preferably in the range from 0.85 to 2.5 and in particular in the range from 1.0 to 2.0.

Preference is also given to propylene copolymers B which have an isotactic structure with regard to subsequently incorporated propylene units.

The properties of the propylene copolymer compositions of the present invention are also determined by the viscosity ratio of the propylene copolymer B and the propylene polymer A, i.e. the ratio of the molar mass of the dispersed phase to the molar mass of the matrix. In particular, this influences the transparency.

To determine the viscosity ratio, the propylene copolymer compositions can be fractionated by means of TREF fractionation (Temperature Rising Elution Fractionation). The propylene copolymer B is then the combined fractions which are eluted by xylene at temperatures up to and including 70°C. The propylene polymer A is obtained from the combined fractions which are eluted by xylene at temperatures above 70°C. The shear viscosity of the polymers is determined on the components obtained in this way. The determination is usually carried out by a method based on ISO 6721-10 using a rotation viscometer having a plate/plate geometry, diameter = 25 mm, amplitude = 0.05-0.5, preheating time =10-12 min, at a temperature of from 200 to 230°C. The ratio of the shear viscosity of propylene copolymer B to that of propylene polymer A is then reported at a shear rate of 100s⁻¹.

In preferred propylene copolymer compositions, the ratio of the shear viscosity of propylene copolymer B to that of propylene polymer A at a shear rate of 100s⁻¹ is in the range from 0.3 to 2.5, preferably from 0.5 to 2 and particularly preferably in the range from 0.7 to 1.75.

The propylene copolymer compositions of the present invention preferably have a narrow molar mass distribution M_{w}/Mₙ. The molar mass distribution M_{w}/Mₙ is, for the purposes of the invention, the ratio of the weight average molar mass M_{w} to the number average molar mass Mₙ. The molar mass distribution M_{w}/Mₙ is preferably in the range from 1.5 to 3.5, particularly preferably in the range from 2 to 2.5 and in particular in the range from 2 to 2.3.

The molar mass Mₙ of the propylene copolymer compositions of the present invention is preferably in the range from 20,000 g/mol to 500,000 g/mol, particularly preferably in the range from 50,000 g/mol to 200,000 g/mol and very particularly preferably in the range from 80,000 g/mol to 150,000 g/mol.

The present invention further provides for the preparation of the propylene polymers present in the propylene copolymer compositions of the present invention. This is preferably carried out in a multistage polymerization process comprising at least two successive polymerization steps which are generally carried out in a reactor cascade. It is possible to use the customary reactors employed for the preparation of propylene polymers.

The polymerization can be carried out in a known manner in bulk, in suspension, in the gas phase or in a supercritical medium. It can be carried out batchwise or preferably continuously. Solution processes, suspension processes, stirred gas-phase processes or gas-phase fluidized-bed processes are possible. As solvents or suspension media, it is possible to use inert hydrocarbons, for example isobutane, or else the monomers themselves. It is also possible to carry out one or more steps of the process of the present invention in two or more reactors. The size of the reactors is not of critical importance for the process of the present invention. It depends on the output which is to be achieved in the individual reaction zone(s).

Preference is given to processes in which the polymerization in the second step in which the propylene copolymer(s) B is/are formed takes place from the gas phase. The preceding polymerization of the propylene polymers A can be carried out either in block, i.e. in liquid propylene as suspension medium, or else from the gas phase. If all polymerizations take place from the gas phase, they are preferably carried out in a cascade comprising stirred gas-phase reactors which are connected in series and in which the pulverulent reaction bed is kept in motion by means of a vertical stirrer. The reaction bed generally consists of the polymer which is polymerized in the respective reactor. If the initial polymerization of the propylene polymers A is carried out in bulk, preference is given to using a cascade made up of one or more loop reactors and one or more gas-phase fluidized-bed reactors. The preparation can also be carried out in a multizone reactor.

To prepare the propylene polymers present in the propylene copolymer compositions of the present invention, preference is given to using catalyst systems based on metallocene compounds of transition metals of group 3, 4, 5 or 6 of the Periodic Table of the Elements.

Particular preference is given to catalyst systems based on metallocene compounds of the formula (I), 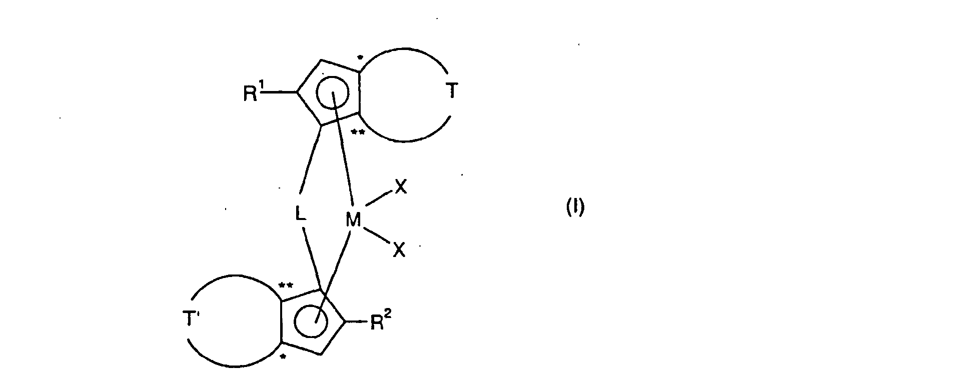 where
- M: is zirconium, hafnium or titanium, preferably zirconium,
- X: are identical or different and are each, independently of one another, hydrogen or halogen or an -R, -OR, -OSO₂CF₃, -OCOR, -SR, -NR₂ or -PR₂ group, where R is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, preferably C₁-C₁₀-alkyl such as methyl, ethyl, n-propyl, isopropyl, n-butyl, isobutyl, sec-butyl, tert-butyl, n-pentyl, n-hexyl, n-heptyl or n-octyl or C₃-C₂₀-cycloalkyl such as cyclopentyl or cyclohexyl, where the two radicals X may also be joined to one another and preferably form a C₄-C₄₀-dienyl ligand, in particular a 1,3-dienyl ligand, or an -OR'O- group in which the substituent R' is a divalent group
selected from the group consisting of C₁-C₄₀-alkylidene, C₆-C₄₀-arylidene, C₇-C₄₀-alkylarylidene and C₇-C₄₀-arylalkylidene,
where X is preferably a halogen atom or an -R or -OR group or the two radicals X form an -OR'O- group and X is particularly preferably chlorine or methyl,
- L: is a divalent bridging group selected from the group consisting of C₁-C₂₀-alkylidene radicals, C₃-C₂₀-cycloalkylidene radicals, C₆-C₂₀-arylidene radicals, C₇-C₂₀-alkylarylidene radicals and C₇-C₂₀-arylalkylidene radicals, which may contain heteroatoms of groups 13-17 of the Periodic Table of the Elements, or a silylidene group having up to 5 silicon atoms, e.g. -SiMe₂- or -SiPh₂-,
where L preferably is a radical selected from the group consisting of -SiMe₂-, -SiPh₂-, -SiPhMe-, -SiMe(SiMe₃)-, -CH₂-, -(CH₂)₂-, -(CH₂)₃- and -C(CH₃)₂-,
- R¹: is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R¹ is preferably unbranched in the α position and is preferably a linear or branched C₁-C₁₀-alkyl group which is unbranched in the α position, in particular a linear C₁-C₄-alkyl group such as methyl, ethyl, n-propyl or n-butyl,
- R²: is a group of the formula -C(R³)₂R⁴, where
- R³: are identical or different and are each, independently of one another, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R³ may be joined to form a saturated or unsaturated C₃-C₂₀-ring,
where R³ is preferably a linear or branched C₁-C₁₀-alkyl group, and
- R⁴: is hydrogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
where R⁴ is preferably hydrogen,
- T and T': are divalent groups of the formulae (II), (III), (IV), (V) or (VI), 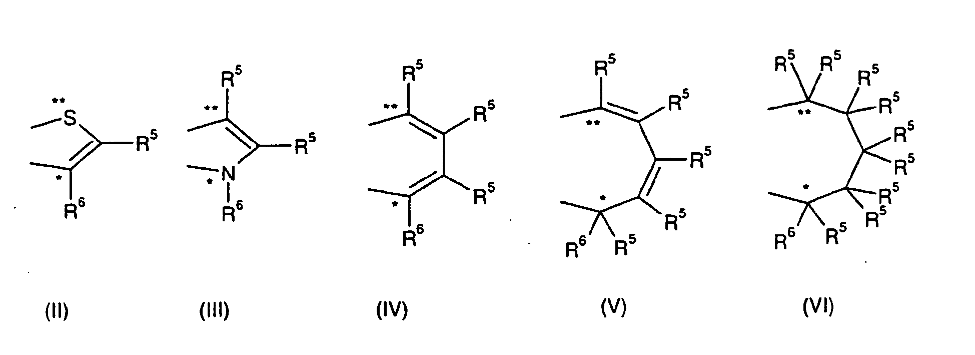
where
the atoms denoted by the symbols * and ** are joined to the atoms of the compound of the formula (I) which are denoted by the same symbol, and
- R⁵: are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
where R⁵ is preferably hydrogen or a linear or branched C₁-C₁₀-alkyl group, in particular a linear C₁-C₄-alkyl group such as methyl, ethyl, n-propyl or n-butyl, and
- R⁶: are identical or different and are each, independently of one another, halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
where R⁶ is preferably an aryl group of the formula (VII), 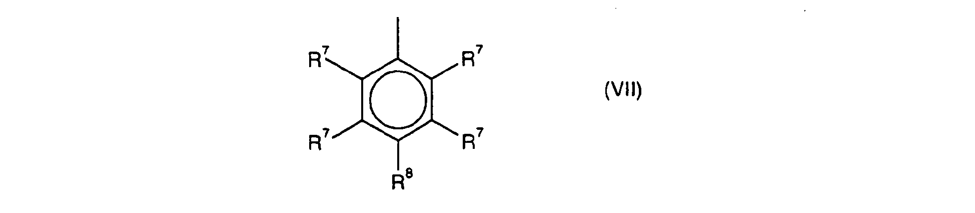
where
- R⁷: are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R⁷ may be joined to form a saturated or unsaturated C₃-C₂₀ ring,
where R⁷ is preferably a hydrogen atom, and
- R⁸: is hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
where R⁸ is preferably a branched alkyl group of the formula -C(R⁹)₃, where
- R⁹: are identical or different and are each, independently of one another, a linear or branched C₁-C₆-alkyl group or two or three of the radicals R⁹ are joined to form one or more ring systems.

It is preferred that at least one of the groups T and T' is substituted by a radical R⁶ of the formula (VII); it is particularly preferred that both groups are substituted by such a radical. Very particular preference is given to at least one of the groups T and T' being a group of the formula (IV) which is substituted by a radical R⁶ of the formula (VII) and the other either has the formula (II) or (IV) and is likewise substituted by a radical R⁶ of the formula (VII).

The greatest preference is given to catalyst systems based on metallocene compounds of the formula (VIII),

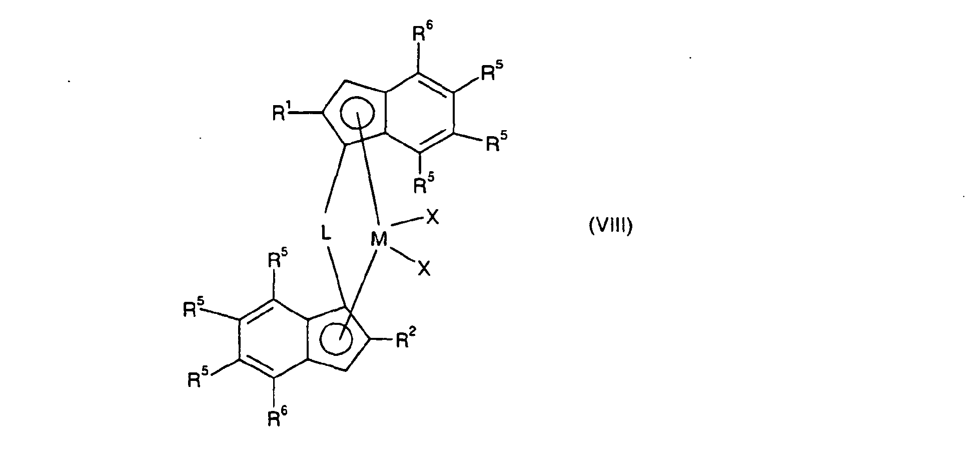

Particularly useful metallocene compounds and methods of preparing them are described, for example, in WO 01/48034 and the European patent application No. 01204624.9.

The metallocene compounds of the formula (I) are preferably used in the rac or pseudorac form,
where the pseudorac form is a complex in which the two groups T and T' are in the rac arrangement relative to one another when all other substituents are disregarded. Such metallocene lead to polypropylenes having a predominantly isotactic structure.

It is also possible to use mixtures of various metallocene compounds or mixtures of various catalyst systems. However, preference is given to using only one catalyst system comprising one metallocene compound, which is used for the polymerization of the propylene polymer A and the propylene copolymer B.

Examples of useful metallocene compounds are
dimethylsilanediyl(2-ethyl-4-(4'-tert-butylphenyl)indenyl)(2-isopropyl-4-(4'-tert-butylphenyl)indenyl)zirconium dichloride,
dimethylsilanediyl(2-methyl-4-(4'-tert-butylphenyl)indenyl)(2-isopropyl-4-(1-naphthyl)indenyl)-zirconium dichloride,
dimethylsilanediyl(2-methyl-4-phenyl-1-indenyl)(2-isopropyl-4-(4'-tert-butylphenyl)-1-indenyl)-zirconium dichloride,
dimethylsilanediyl(2-methylthiapentenyl)(2-isopropyl-4-(4'-tert-butylphenyl)indenyl)zirconium dichloride,
dimethylsilanediyl(2-isopropyl-4-(4'-tert-butylphenyl)indenyl)(2-methyl-4,5-benzindenyl)zirconium dichloride,
dimethylsifanediyl(2-methyl-4-(4'-tert-butylphenyl)indenyl)(2-isopropyl-4-(4'-tert-butylphenyl)indenyl)zirconium dichloride,
dimethylsilanediyl(2-methyl-4-(4'-tert-butylphenyl)indenyl)(2-isopropyl-4-phenylindenyl)zirconium dichloride,
dimethylsilanediyl(2-ethyl-4-(4'-tert-butylphenyl)indenyl)(2-isopropyl-4-phenyl)indenyl)zirconium dichloride and
dimethylsilanediyl(2-isopropyl-4-(4'-tert-butylphenyl)indenyl)(2-methyl-4-(1-naphthyl)indenyl)-zirconium dichloride and mixtures thereof.

The preferred catalyst systems based on metallocene compounds generally further comprise compounds capable of forming metallocenium ions as cocatalysts. Suitable compounds of this type include strong, uncharged Lewis acids, ionic compounds having Lewis-acid cations and ionic compounds containing Brönsted acids as cations. Examples are tris(pentafluorophenyl)borane, tetrakis(pentafluorophenyl)borate or salts of N,N-dimethylanilinium. Likewise suitable as compounds capable of forming metallocenium ions and thus as cocatalysts are open-chain or cyclic aluminoxane compounds. These are usually prepared by reaction of a trialkylaluminum with water and are generally in the form of mixtures of both linear and cyclic chain molecules of various lengths. The preferred catalyst systems based on metallocene compounds are usually used in supported form. Suitable supports are, for example, porous organic or inorganic inert solids such as finely divided polymer powders or inorganic oxides, for example silica gel. The metallocene catalyst systems may further comprise organometallic compounds of metals of groups 1, 2 and 13 of the Periodic Table, e.g. n-butyllithium or aluminum alkyls.

In the preparation of the propylene polymers present in the propylene copolymer compositions of the present invention, preference is given to firstly forming the propylene polymer A in a first step by polymerizing from 90% by weight to 100% by weight, based on the total weight of the mixture, of propylene in the presence or absence of further olefins, usually at from 40°C to 120°C and pressures in the range from 0.5 bar to 200 bar. The polymer obtainable by means of this reaction subsequently has a mixture of from 2 to 95% by weight of propylene and from 5% to 98% by weight of further olefins polymerized onto it in a second step, usually at from 40°C to 120°C and pressures in the range from 0.5 bar to 200 bar. The polymerization of the propylene polymer A is preferably carried out at from 60 to 80°C, particularly preferably from 65 to 75°C, and a pressure of from 5 to 100 bar, particularly preferably from 10 bar to 50 bar. The polymerization of the propylene copolymer B is preferably carried out at from 60 to 80°C, particularly preferably from 65 to 75°C, and a pressure of from 5 to 100 bar, particularly preferably from 10 bar to 50 bar.

In the polymerization, it is possible to use customary additives, for example molar mass regulators such as hydrogen or inert gases such as nitrogen or argon.

The amounts of the monomers added in the individual steps and also the process conditions such as pressure, temperature or the addition of molar mass regulators such as hydrogen is chosen so that the polymers formed have the desired properties. The scope of the invention includes the technical teaching that a propylene copolymer composition which has a good impact toughness at low temperatures and at the same time a good transparency and good stress whitening behavior is obtainable, for example, by setting a defined comonomer content of the propylene copolymer B and the viscosity ratio of propylene polymer A to propylene copolymer B.

The composition of the propylene copolymer B has significant effects on the transparency of the propylene copolymer compositions of the present invention. A reduction in the comonomer content of the propylene copolymer B leads to an improved transparency, while at the same time, however, the low-temperature impact toughners decreases. An increase in the comonomer content of the propylene copolymer B results in an improvement in the low-temperature impact toughness, but at the expense of the transparency. At the same time, it is also possible to improve the impact toughness by increasing the proportion of the propylene copolymer B. Accordingly, the products of the present invention display an advantageous combination of these properties, i.e. transparent products which at the same time have good low-temperature impact toughness are obtained. In the case of the preferred use of ethylene as comonomer, particular preference is given to setting an ethylene content of the propylene copolymers B of from 10 to 20% by weight, in particular from 12 to 18% by weight and particularly preferably about 16% by weight. The transparency of the propylene copolymer compositions of the present invention is virtually independent of the proportion of the propylene copolymer B present therein.

Adjustment of the viscosity ratio of propylene polymer A to propylene copolymer B influences the dispersion of the propylene copolymer B in the polymer matrix and thus has effects on the transparency of the propylene copolymer compositions and on the mechanical properties.

The propylene copolymer compositions of the present invention display a very good impact toughness at low temperatures, which in addition is combined with a good transparency and very good stress whitening behavior, and also a relatively high melting point, a high stiffness and good heat distortion resistance. The propylene copolymer compositions also have low extractable contents, a homogeneous comonomer distribution and good organoleptics. Since the temperature for the brittle/tough transition is below -15°C, the propylene copolymer compositions of the present invention can also be used in a temperature range which places high demands on the material properties of the multiphase copolymers at temperatures below freezing point. This opens up wide-ranging new possibilities for the use of the propylene copolymer compositions of the present invention in transparent applications in the low-temperature range.

The multiphase copolymers of the present invention are suitable for producing fibers, films or moldings, in particular for producing injection-molded parts, films, sheets or large hollow bodies, e.g. by means of injection-molding or extrusion processes. Possible applications are the fields of packaging, household articles, containers for storage and transport, office articles, electrical equipment, toys, laboratory requisites, motor vehicle components and gardening requisites, in each case especially for applications at low temperatures.

The invention is illustrated by the following preferred examples which do not restrict the scope of the invention:

### Examples

The examples and comparative examples were carried out using procedures analogous to examples 98 to 102 of WO 01/48034, with comparative examples A, B and C corresponding to examples 98, 99 and 100 of WO 01/48034.

### Preparation of the metallocene catalyst

3 kg of Sylopol 948 were placed in a process filter whose filter plate pointed downward and suspended in 15 l of toluene. 7 l of 30% strength by weight MAO solution (from Albemarle) were metered in while stirring at such a rate that the internal temperature did not exceed 35°C. After stirring for a further 1 hour at a low stirrer speed, the suspension was filtered, firstly with no applied pressure and then under a nitrogen pressure of 3 bar. Parallel to the treatment of the support material, 2.0 I of 30% strength by weight MAO solution were placed in a reaction vessel, 92.3 g of rac-dimethylsilyl(2-methyl-4-(para-tert-butylphenyl)indenyl)(2-isopropyl-4-(para-tert-butylphenyl)indenyl)zirconium dichloride were added, the solution was stirred for 1 hour and allowed to settle for a further 30 minutes. The solution was subsequently run onto the pretreated support material with the outlet closed. After the addition was complete, the outlet was opened and the filtrate was allowed to run off. The outlet was subsequently closed, the filter cake was stirred for 15 minutes and allowed to stand for 1 hour. The liquid was then pressed out from the filter cake by means of a nitrogen pressure of 3 bar with the outlet open. 15 l of isododecane were added to the solid which remained, the mixture was stirred for 15 minutes and filtered. The washing step was repeated and the filter cake was subsequently pressed dry by means of a nitrogen pressure of 3 bar. For use in the polymerization, the total amount of the catalyst was resuspended in 15 l of isododecane.

### Polymerization

The process was carried out in two stirring autoclaves which were connected in series and each had a utilizable capacity of 200 I and were equipped with a free-standing helical stirrer. Both reactors contained an agitated fixed bed of finely divided propylene polymer.

The propylene was passed in gaseous form into the first polymerization reactor and polymerized at a mean residence time as shown in Table 1 by means of the metallocene catalyst at a pressure and temperature as shown in Table 1. The amount of metallocene catalyst metered in was such that the amount of polymer transferred from the first polymerization reactor into the second polymerization reactor corresponded, on average, to the amounts shown in Table 1. The metallocene catalyst was metered in together with the Frisch propylene added to regulate the pressure. Triethylaluminum in the form of a 1 molar solution in heptane was likewise metered into the reactor.

The propylene copolymer obtained in the first gas-phase reactor was transferred together with still active catalyst constituents into the second gas-phase reactor. There, the propylene-ethylene copolymer B was polymerized onto it at a total pressure, a temperature and a mean residence time as shown in Table 1. The ethylene concentration in the reaction gas was monitored by gas chromatography. The weight ratio of the propylene polymer A formed in the first reactor [A(I)] to the propylene copolymer B formed in the second reactor [B(II)] is shown in Table 1. Isopropanol (in the form of a 0.5 molar solution in heptane) was likewise metered into the second reactor. The weight ratio of the polymer formed in the first reactor to that formed in the second reactor was controlled by means of isopropanol which was metered into the second reactor in the form of a 0.5 molar solution in heptane and is shown in Table 1. To regulate the molar mass, hydrogen was metered into the second reactor as necessary. The proportion of propylene-ethylene copolymer B formed in the second reactor is given by the difference of amount transferred and amount discharged according to the relationship (output from second reactor - output from first reactor)/ output from second reactor.

**Table 1: Polymerization conditions**

| | Example 1 | Example 2 | Comparative example A | Comparative example B | Comparative example C |
|---|---|---|---|---|---|
| Reactor I | | | | | |
| Pressure [bar] | 28 | 28 | 28 | 29 | 29 |
| Temperature [°C] | 73.5 | 73 | 75 | 75 | 75 |
| Triethylaluminum, 1 M in heptane [ml/h] | 90 | 90 | 60 | 60 | 60 |
| Residence time [h] | 1.5 | 1.5 | 2.25 | 2.25 | 2.25 |
| Powder MFR (230°C/2.16 kg) [g/10 min]/ISO 1133 | 10.7 | 20 | 11.0 | 9.8 | 9.2 |
| Powder output [kg/h] | 30 | 30 | 20 | 20 | 20 |
| Reactor II | | | | | |
| Pressure [bar] | 15 | 15 | 15 | 15 | 15 |
| Temperature [°C] | 65 | 70 | 65 | 65 | 65 |
| Ethylene [% by volume] | 36 | 41.5 | 30 | 41 | 49 |
| Hydrogen [standard l/h*] | 10.6 | 0 | 0 | 0 | 0 |
| Residence time [h] | 1.0 | 1.0 | 1.7 | 1.7 | 1.7 |
| Powder output [kg/h] | 43.7 | 42.6 | 24.1 | 24.2 | 24.3 |
| Powder MFR (230°C/2.16 kg) [g/10 min]/ISO 1133 | 13 | 13 | 10.7 | 8.7 | 5.5 |
| Content of propylene polymer A [% by weight] | 69 | 70 | 83 | 83 | 82 |
| Content of propylene-ethylene copolymer B [% by weight] | 31 | 30 | 17 | 17 | 18 |
| Weight ratio of A(I):B(II) | 2.2 | 2.4 | 4.9 | 4.8 | 4.7 |

| | | | | | |
|---|---|---|---|---|---|
| *) Standard I/h: standard liters per hour | | | | | |

The polymer powder obtained in the polymerization was admixed with a standard additive mixture in the granulation step. Granulation was carried out using a twin-screw extruder ZSK 30 from Werner & Pfleiderer at a melt temperature of 250°C. The propylene copolymer composition obtained contained 0.05% by weight of Irganox 1010 (from Ciba Specialty Chemicals), 0.05% by weight of Irgafos 168, (from Ciba Specialty Chemicals), 0.1% by weight of calcium stearate and 0.22% by weight of Millad 3988 (bis-3,4-dimethylbenzylidenesorbitol, from Milliken Chemical). The properties of the propylene copolymer composition are shown in Tables 2 and 3. The data were determined on the propylene copolymer composition after addition of additives and granulation or on test specimens produced therefrom.

**Table 2: Analytical results on the propylene copolymer composition**

| | Example 1 | Example 2 | Comparative example A | Comparative example B | Comparative example C |
|---|---|---|---|---|---|
| C₂ content (¹³C-NMR) [% by weight] | 5.7 | 6.2 | 2.7 | 5.1 | 10.2 |
| C₂ content of propylene-ethylene copolymer B (¹³C-NMR) [% by weight] | 16.1 | 15.7 | 11.6 | 22.1 | 42.3 |
| Limiting viscosity (ISO 1628) [cm³/g] | | | | | |
| Propylene polymer A | 160 | 148 | 175 | 164 | 185 |
| Propylene-ethylene copolymer B | 117 | 150 | 152 | 157 | 191 |
| PEP (¹³C-NMR) [% by weight] | 3.97 | 3.94 | 1.5 | 1.7 | 1.7 |
| PEₓ (¹³C-NMR) [% by weight] | 4.31 | 4.00 | 1.0 | 2.4 | 4.4 |
| PEP/PEₓ | 0.92 | 0.99 | 1.5 | 0.71 | 0.39 |
| Glass transition temperatures [°C] | -2*/ | -2*/ | -6*** | 2*/ | 2*/ |
| (DMTA, ISO 6721-7) | -35" | -33** | | -42** | -56** |
| Molar mass Mₙ [g/mol] | 82 000 | 81 000 | 101 000 | 95 000 | 106000 |
| Molar mass distribution [M_{w}/Mₙ] | 2.1 | 2.2 | 2.1 | 2.1 | 2.0 |
| Shear viscosity η₁₀₀ of propylene-ethylene copolymer B **** | 162 | 311 | 293 | 382 | 1167 |
| Shear viscosity η₁₀₀ of propylene polymer A **** | 353 | 182 | 313 | 377 | 404 |
| Ratio of the shear viscosities of propylene-ethylene copolymer B/propylene polymer A (ω=100s⁻¹)**** | 0.5 | 1.7 | 0.9 | 1.0 | 2.9 |

| | | | | | |
|---|---|---|---|---|---|
| *) Glass transition temperature of the propylene polymer A **) Glass transition temperature of the propylene-ethylene copolymer B ***) Only one value was measured. This value corresponds to a mixing temperature and indicates that in the comparative example the propylene polymer A and the propylene-ethylene copolymer B are miscible. ****) Shear viscosities at a shear rate of 100 s⁻¹ and a measurement temperature of 230°C in each case; except for example 1 in which the measurement temperature was 220°C. | | | | | |

**Table 3: Use-related tests on the propylene copolymer composition**

| | Example 1 | Example 2 | Comparative example A | Comparative example B | Comparative example C |
|---|---|---|---|---|---|
| MFR (230°C/2, 16 kg) [g/10 min]/ ISO 1133 | 16.2 | 16.5 | 12.3 | 8.7 | 6.9 |
| DSC melting point [°C]/ ISO 3146 | 156.0 | 155.9 | 156 | 157.0 | 157.0 |
| Vicat A softening temperature [°C]/ISO 306 VST/A50 | 128 | 127 | 141 | 139 | 140 |
| Heat distortion resistance HDT B [°C]/ISO 75-2 meth. B | 66 | 64 | 81 | 76 | 78 |
| Tensile E modulus [Mpa]/ISO 527 | 602 | 609 | 1156 | 1006 | 1093 |
| Brittle/tough transition temperature [°C] | -28 | -23 | 9 | -15 | <-30 |
| Charpy impact toughness (+23°C) [kJ/m²]/ISO 179-2/1eU | NF | NF | NF | NF | NF |
| Charpy impact toughness (0°C) [kJ/m²]/ISO 179-2/1eU | 194 | NF | 163 | NF | NF |
| Charpy impact toughness (-20°C) [kJ/m²]/ISO 179-2/1eU | 265 | NF | 28 | 180 | 130 |
| Charpy notched impact toughness (+23°C) [kJ/m²]/ISO 179-2/1eA. | 41.3 | 49.4 | 7.6 | 43.7 | 48.8 |
| Charpy notched impact toughness (0°C) [kJ/m²]/ISO 179-2/1eA | 28.9 | 12.6 | 2.0 | 6.9 | 19.4 |
| Charpy notched impact toughness (-20°C) [kJ/m²]/ISO 179-2/1eA | 2.6 | 2.1 | 1.4 | 1.5 | 3.3 |
| Haze (1 mm*) [%]/ ASTM D 1003 | 15 | 25 | 12 | 35 | 68 |
| Haze (50 µm**) [%] ASTM D 1003 | 15 | 17 | 10 | 20 | 17 |
| Stress whitening (23°C) [mm]/ dome method | 0 | 0 | 0 | 9.4 | 12.0 |

| | | | | | |
|---|---|---|---|---|---|
| NF: no fracture *) Injection-molded plates having a thickness of 1 mm. **) Films having a thickness of 50 *µ*m (no clear dependences of the haze value are observed) | | | | | |

Compared to comparative example A, the propylene copolymer compositions according to the present invention have an improved toughness, in particular at low temperatures. Compared to comparative example B and C, a significantly better transparency is achieved without the toughness deteriorating significantly.

### Analysis

The production of the test specimens required for the use-related tests and the tests themselves were carried out in accordance with the standards indicated in Table 3.

To determine analytical data on product fractions, the polymers or polymer compositions prepared were fractionated by means of TREF as described by L. Wild, "Temperature Rising Elution Fractionation", Advanced Polym. Sci. 98, 1-47 ,1990, in xylene. Fractions were eluted at 40, 70, 80, 90, 95, 100, 110 and 125°C and assigned to the propylene polymer A prepared in reactor I or the propylene copolymer B prepared in reactor II. As propylene-ethylene copolymer B, use was made of the combined fractions of a TREF eluted at temperatures up to and including 70°C. As propylene polymer A, use was made of the combined fractions of a TREF eluted above 70°C.

The brittle/tough transition was determined by means of the puncture test described in ISO 6603-2/40/20/C/4.4. The velocity of the punch was chosen as 4.4 m/s, the diameter of the support ring was 40 mm and the diameter of the impact ring was 20 mm. The test specimen was clamped in. The test specimen geometry was 6 cm × 6 cm at a thickness of 2 mm. To determine the temperature dependence curve, measurements were carried out at steps of 2°C in the temperature range from 26°C to -35°C using a test specimen preheated/precooled to the respective temperature.

In the present examples, the brittle/tough transition was determined from the total deformation in mm defined as the displacement through which the punch has traveled when the force has passed through a maximum and dropped to 3% of this maximum force. For the purposes of the present invention, the brittle/tough transition temperature is defined as the temperature at which the total deformation is at least 25% below the mean total deformation of the preceding 5 measurement points.

The determination of the Haze values was carried out in accordance with the standard ASTM D 1003. The values were determined on samples containing 2200 ppm of Millad 3988. The test specimens were injection-molded plates having an edge length of 6 × 6 cm and a thickness of 1 mm. The test specimens were injection molded at a melt temperature of 250°C and a tool surface temperature of 30°C. To determine the haze value of films, films having a thickness of 50 µm were produced by pressing. After a storage time of 7 days at room temperature for after-crystallization, the test specimens were clamped into the clamping device in front of the inlet orifice of a Hazegard System XL 211 from Pacific Scientific and the measurement was subsequently carried out. Testing was carried out at 23°C, with each test specimen being examined once in the middle. To obtain a mean, 5 test specimens were tested in each case.

The stress whitening behavior was assessed by means of the domed method. In the dome method, the stress whitening was determined by means of a falling dart apparatus as specified in DIN 53443 Part 1 using a falling dart having a mass of 250 g, a punch diameter of 5 mm and a dome radius of 25 mm. The drop was 50 cm. As test specimen, use was made of an injection-molded circular disk having a diameter of 60 mm and a thickness of 2 mm. The test specimen was injection molded at a melt temperature of 250°C and a tool surface temperature of 30°C. Testing was carried out at 23°C, with each test specimen being subjected to only one impact test. The test specimen was first laid on a support ring without being clamped and the falling dart was subsequently released. To obtain the mean, at least five test specimens were tested. The diameter of the visible stress whitening region is reported in mm and was determined by measuring this region in the flow direction and perpendicular thereto on the side of the circular disk opposite that on which impact occurs and forming the mean of the two values.

The C₂ content and the structure of the propylene-ethylene copolymers was determined by means of ¹³C-NMR spectroscopy.

The E modulus was measured in accordance with ISO 527-2:1993. The test specimen of type 1 having a total length of 150 mm and a parallel section of 80 mm was injection molded at a melt temperature of 250°C and a tool surface temperature of 30°C. To allow after-crystallization to occur, the test specimen was stored for 7 days under standard conditions of 23°C/50% atmospheric humidity. A test unit model Z022 from Zwick-Roell was used for testing. The displacement measurement system in the determination of the E modulus had a resolution of 1 µm. The testing velocity in the determination of the E modulus was 1 mm/min, otherwise 50 mm/min. The yield point in the determination of the E modulus was in the range 0.05%-0.25%.

The determination of the melting point was carried out by means of DSC (differential scanning calorimetry). The measurement was carried out in accordance with ISO standard 3146 using a first heating step at a heating rate of 20°C per minute up to 200°C, a dynamic crystallization at a cooled rate of 20°C per minute down to 25°C and a second heating step at a heating rate of 20°C per minute back up to 200°C. The melting point is then the temperature at which the enthalpy versus temperature curve measured during the second heating step displays a maximum.

The determination of the molar mass Mₙ and the molar mass distribution M_{w}/Mₙ was carried out by gel permeation chromatography (GPC) at 145°C in 1,2,4-trichlorobenzene using a GPC apparatus model 150C from Waters. The data were evaluated by means of the Win-GPC software from HS-Entwicklungsgesellschaft für wissenschaftliche Hard- und Software mbH, Ober-Hilbersheim. The columns were calibrated by means of polypropylene standards having molar masses from 100 to 10⁷ g/mol.

The determination of the limiting viscosity, namely the limiting value of the viscosity number when the polymer concentration is extrapolated to zero, was carried out in decalin at 135°C in accordance with ISO 1628.

The shear viscosities were determined by a method based on ISO 6721-10 (RDS apparatus with plate/plate geometry, diameter = 25 mm, amplitude = 0.05-0.5, preheating time = 10-12 min, T = 200-230°C). The ratio of the shear viscosity of propylene copolymer B to that of propylene copolymer A was determined at a shear rate of 100s⁻¹. The measurement temperature was 220 - 230°C.

To determine the glass transition temperature by means of DMTA in accordance with ISO 6721-7, a test specimen having dimensions of 10 mm × 60 mm and a thickness of 1 mm was stamped from a sheet pressed from the melt, 210°C, 7 min at 30 bar, cooling rate after completion of pressing = 15 K/min. This test specimen was clamped in the apparatus and the measurement was commenced at -100°C. The heating rate was 2.5 K/min and the measurement frequency was 1 Hz.

## Claims

1. A propylene copolymer composition comprising
A) a propylene polymer containing from 0 to 10% by weight of olefins other than propylene and
B) at least one propylene copolymer containing from 12 to 18% by weight of olefins other than propylene,
where the propylene polymer A and the propylene copolymer B are present as separate phases, the weight ratio of propylene polymer A to the propylene copolymer B is from 80:20 to 60:40 and the propylene copolymer composition has a haze value of ≤ 30%, based on a path length of the propylene copolymer composition of 1 mm, and the brittle/tough transition temperature of the propylene copolymer composition is ≤ -15°C.

2. A propylene copolymer composition as claimed in claim 1. wherein the propylene polymer A is a propylene homopolymer.

3. A propylene copolymer composition as claimed in claim 1 or 2, wherein the propylene polymer A has an isotactic structure.

4. A propylene copolymer composition as claimed in any of claims 1 to 3, wherein the olefin other than propylene is exclusively ethylene.

5. A propylene copolymer composition as claimed in any of claims 1 to 4, wherein the value for stress whitening, determined by the dome method at 23°C, is from 0 to 8 mm.

6. A propylene copolymer composition as claimed in any of claims 1 to 5, wherein the copolymer B is dispersed in finely divided form in the matrix A.

7. A propylene copolymer composition as claimed in any of claims 1 to 6, comprising from 0.1 to 1% by weight, based on the total weight of the propylene copolymer composition, of a nucleating agent.

8. A propylene copolymer composition as claimed in any of claims 1 to 7, wherein the glass transition temperature of the propylene copolymer B determined by means of DMTA (dynamic mechanical thermal analysis) is in the range from -20°C to -40°C.

9. A propylene copolymer composition as claimed in any of claims 1 to 8, wherein the ratio of the shear viscosity of propylene copolymer B to that of propylene polymer A at a shear rate of 100 s⁻¹ is in the range from 0.3 to 2.5.

10. A propylene copolymer composition as claimed in any of claims 1 to 9, wherein the molar mass distribution M_{w}/Mₙ is in the range from 1.5 to 3.5.

11. A process for preparing a propylene copolymer composition as claimed in any of claims 1 to 10, wherein a multistage polymerization is carried out and a catalyst system based on metallocene compounds is used.

12. The use of a propylene copolymer composition as claimed in any of claims 1 to 10 for producing fibers, films or moldings.

13. A fiber, film or molding comprising a propylene copolymer composition as claimed in any of claims 1 to 10, preferably as substantial component.

## Patentansprüche

1. Propylencopolymerisat-Zusammensetzung, enthaltend
A) ein Propylenpolymerisat mit von 0 bis 10 Gew.-% von Propylen verschiedenen Olefinen und
B) mindestens ein Propylencopolymerisat mit 12 bis 18 Gew.-% von Propylen verschiedenen Olefinen,
wobei das Propylenpolymerisat A und das Propylencopolymerisat B phasensepariert vorliegen, das Gewichtsverhältnis von Propylenpolymerisat A zu Propylencopolymerisat B im Bereich von 80 : 20 bis 60 : 40 liegt und
die Propylencopolymerisat-Zusammensetzung einen Haze-Wert von ≤ 30 % aufweist, bezogen auf eine Schichtdicke der Propylencopolymerisat-Zusammensetzung von 1 mm, und die spröd/zäh-Übergangstemperatur der Propylencopolymerisat-Zusammensetzung bei Temperaturen ≤ -15°C liegt.

2. Propylencopolymerisat-Zusammensetzung nach Anspruch 1, wobei das Propylenpolymerisat A ein Propylenhomopolymerisat ist.

3. Propylencopolymerisat-Zusammensetzung nach Anspruch 1 oder 2, wobei das Propylenpolymerisat A isotaktisch aufgebaut ist.

4. Propylencopolymerisat-Zusammensetzung nach den Ansprüchen 1 bis 3, wobei das von Propylen verschiedene Olefin ausschließlich Ethylen ist.

5. Propylencopolymerisat-Zusammensetzung nach den Ansprüchen 1 bis 4, wobei der Wert für den Weißbruch, bestimmt mit der Kalottenmethode bei 23°C, von 0 bis 8 mm beträgt.

6. Propylencopolymerisat-Zusammensetzung nach den Ansprüchen 1 bis 5, wobei das Copolymerisat B in der Matrix A dispers verteilt ist.

7. Propylencopolymerisat-Zusammensetzung nach den Ansprüchen 1 bis 6, enthaltend von 0,1 bis 1 Gew.-%, bezogen auf das Gesamtgewicht der Propylencopolymerisat-Zusammensetzung, eines Nukleierungsmittels.

8. Propylencopolymerisat-Zusammensetzung nach den Ansprüchen 1 bis 7, wobei die Glasübergangstemperatur des Propylencopolymerisats B, bestimmt mittels DMTA (Dynamisch-mechanisch-thermische Analyse), im Bereich von -20°C bis -40°C liegt.

9. Propylencopolymerisat-Zusammensetzung nach den Ansprüchen 1 bis 8, wobei das Verhältnis der Scherviskositäten von Propylencopolymerisat B und Propylenpolymerisat A bei einer Scherrate von 100 s⁻¹ im Bereich von 0,3 bis 2,5 liegt.

10. Propylencopolymerisat-Zusammensetzung nach den Ansprüchen 1 bis 9, wobei die Molmassenverteilung M_{w}/Mₙ im Bereich von 1,5 bis 3,5 liegt.

11. Verfahren zur Herstellung einer Propylencopolymerisat-Zusammensetzung nach den Ansprüchen 1 bis 10, **dadurch gekennzeichnet, daß** man eine mehrstufige Polymerisation durchführt und ein Katalysatorsystem auf Basis von Metallocenverbindungen einsetzt.

12. Verwendung einer Propylencopolymerisat-Zusammensetzung nach den Ansprüchen 1 bis 10 zur Herstellung von Fasern, Folien oder Formkörpern.

13. Fasern, Folien oder Formkörper, enthaltend eine Propylencopolymerisat-Zusammensetzung nach den Ansprüchen 1 bis 10, vorzugsweise als wesentliche Komponente.

## Revendications

1. Composition de copolymère de propylène comprenant
(A) un polymère de propylène contenant de 0 à 10 % en poids d'oléfines autres que le propylène et
(B) au moins un copolymère de propylène contenant de 12 à 18 % en poids d'oléfines autres que le propylène,
dans laquelle le polymère de propylène A et le copolymère de propylène B sont présent sous forme de phase séparées, le rapport de poids entre le polymère de propylène A et le copolymère de propylène B va de 80 :20 à 60 :40 et la composition de copolymère de propylène a une valeur de trouble ≤ 30 %, sur la base d'une longueur de parcours de la composition de copolymère de propylène de 1mm, et la température de transition fragile-résistant de la composition de copolymère de propylène est ≤ -15°C.

2. Composition de copolymère de propylène selon la revendication 1, dans laquelle le polymère de propylène A est un homopolymère de propylène.

3. Composition de copolymère de propylène selon la revendication 1 ou 2,
dans laquelle le polymère de propylène A a une structure isotactique.

4. Composition de copolymère de propylène selon l'une des revendications 1 à 3, dans laquelle l'oléfine autre que le propylène est exclusivement de l'éthylène.

5. Composition de copolymère de propylène selon l'une des revendications 1 à 4, dans laquelle la valeur de blanchiment sous contrainte, déterminée par le procédé de dôme à 23°C, est entre 0 et 8 mm.

6. Composition de copolymère de propylène selon l'une des revendications 1 à 5, dans laquelle le copolymère de propylène B est dispersé en forme finement divisée dans la matrice A.

7. Composition de copolymère de propylène selon l'une des revendications 1 à 6, comprenant de 0,1 à 1% en poids d'un agent de nucléation, sur la base du poids total de la composition de copolymère de propylène.

8. Composition de copolymère de propylène selon l'une des revendications 1 à 7, dans laquelle la température de transition vitreuse du copolymère de propylène B déterminée au moyen de DMTA (analyse thermique mécanique dynamique) est dans une plage allant de -20°C à -40°C.

9. Composition de copolymère de propylène selon l'une des revendications 1 à 8, dans laquelle le rapport de la viscosité de cisaillement du copolymère de propylène B sur celle du polymère de propylène A à un taux de cisaillement de 100 s⁻¹ est dans une plage allant de 0,3 à 2,5.

10. Composition de copolymère de propylène selon l'une des revendications 1 à 9, dans laquelle la distribution de la masse molaire Mw/Mn est dans une plage allant de 1,5 à 3,5.

11. Procédé pour préparer une composition de copolymère de propylène selon l'une des revendications 1 à 10, dans laquelle une polymérisation en plusieurs étapes est réalisée et un système catalyseur sur la base de composés métallocènes est utilisé.

12. Utilisation d'une composition de copolymère de propylène selon l'une des revendications 1 à 10 pour produire des fibres, des films et des moulages.

13. Fibre, film ou moulage comprenant une composition de copolymère de propylène selon l'une des revendications 1 à 10, de préférence en tant que un composant substantiel.
